(19) Europäisches Patentamt
European Patent Office
Office européen des brevets

(11) **EP 4 270 532 A1**

(12) **EUROPEAN PATENT APPLICATION**
published in accordance with Art. 153(4) EPC

(43) Date of publication:
**01.11.2023   Bulletin 2023/44**

(21) Application number: **20967326.8**

(22) Date of filing: **28.12.2020**

(51) International Patent Classification (IPC):
***H01M 4/134*** (2010.01)

(52) Cooperative Patent Classification (CPC):
**H01M 4/134; Y02E 60/10**

(86) International application number:
**PCT/CN2020/140366**

(87) International publication number:
**WO 2022/140975 (07.07.2022 Gazette 2022/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Ningde Amperex Technology Limited
Ningde, Fujian 352100 (CN)**

(72) Inventor: **LIAO, Qunchao
Ningde, Fujian 352100 (CN)**

(74) Representative: **Klunker IP
Patentanwälte PartG mbB
Destouchesstraße 68
80796 München (DE)**

(54) **NEGATIVE ELECTRODE POLE PIECE, ELECTROCHEMICAL DEVICE COMPRISING SAME, AND ELECTRONIC DEVICE**

(57)     This application provides a negative electrode plate and an electrochemical apparatus and electronic apparatus including such negative electrode plate. The negative electrode plate includes a negative electrode material layer, and the negative electrode material layer includes silicon-based particles and graphite particles, where a silicon content B in the silicon-based particle is 20 wt% to 60 wt%, porosity $\alpha_1$ of the silicon-based particle is 15% to 60%, and porosity $\alpha_2$ of the negative electrode plate is 15% to 41%. This design not only allows the negative electrode plate to have sufficient space for lithium intercalation swelling but also guarantees the structural stability and processibility thereof, thereby effectively improving the cycling performance of the electrochemical apparatus and alleviating swelling deformation of the electrochemical apparatus.

FIG. 1

EP 4 270 532 A1

**Description**

**TECHNICAL FIELD**

This application relates to the electrochemical field, and specifically, to a negative electrode plate and an electrochemical apparatus and electronic apparatus including such negative electrode plate.

**BACKGROUND**

With the advantages such as high energy storage density, high open-circuit voltage, low self-discharge rate, long cycle life, and high safety, lithium-ion secondary batteries have been widely used in various fields such as electric energy storage, mobile electronic devices, electric vehicles, and aerospace equipment. With rapid development of the mobile electronic devices and electric vehicles, the market has imposed increasingly high requirements on energy density, safety, cycling performance, service life, and the like of lithium-ion secondary batteries.

With the theoretical capacity of silicon-based materials up to 4200 mAh/g, currently the highest theoretical capacity of negative electrode materials known, and the abundant reserves and low-cost of silicon, silicon-based materials have been often used as a next generation of negative electrode materials with high gram capacity in negative electrode plates of current lithium-ion secondary batteries. However, the volume change rate of silicon-based materials during lithium intercalation and deintercalation is up to more than 300%, therefore a large number of solid electrolyte interphases (Solid Electrolyte Interphase, SEI) are generated, consuming limited lithium ions and electrolyte in lithium-ion secondary batteries, which significantly increases the impedance of lithium-ion secondary batteries, and seriously hinders largescale industrial application of lithium-ion secondary batteries.

Nanosizing and compounding of silicon-based materials are the main solutions for solving the current problems. However, nanosizing of silicon-based materials features complicated preparation process and high energy consumption, and the silicon-based materials are likely to agglomerate due to their ultra-large specific surface area. As a result, the problem of poor cycling stability of the silicon-based materials cannot be solved completely. During compounding of a silicon-based material and a carbon material, the carbon material cannot bear volume swelling of up to 300% of the silicon-based material during lithium intercalation, and the structure of a lithium-ion secondary battery is damaged during cycling. Therefore, the problems of the silicon-based materials cannot be solved completely either.

**SUMMARY**

This application is intended to provide a negative electrode plate and an electrochemical apparatus and electronic apparatus including such negative electrode plate, to improve the cycling performance and alleviate swelling deformation of the electrochemical apparatus.

It should be noted that an example in which a lithium-ion battery is used as an electrochemical apparatus is used to illustrate this application below. However, the electrochemical apparatus in this application is not limited to the lithium-ion battery.

Specific technical solutions are as follows.

According to a first aspect, this application provides a negative electrode plate including a negative electrode material layer. The negative electrode material layer includes silicon-based particles and graphite particles, where silicon content B in the silicon-based particle is 20 wt% to 60 wt%, porosity $\alpha_1$ of the silicon-based particle is 15% to 60%, and porosity $\alpha_2$ of the negative electrode plate is 15% to 41%.

In this application, the "porosity $\alpha_1$ of the silicon-based particle" refers to the percentage of volume of pores in the silicon-based particle compared to a total volume of the silicon-based particle. In this application, the "porosity $\alpha_2$ of the negative electrode plate" refers to the percentage of volume of pores between various particles in the negative electrode plate compared to a total volume of the negative electrode plate.

In an implementation of this application, silicon content B in the silicon-based particle is 20 wt% to 60 wt%. For example, a lower limit value of the silicon content B may include one of the following values: 20 wt%, 30 wt%, or 36 wt%; and an upper limit value of the silicon content B may include one of the following values: 40 wt%, 50 wt%, or 60 wt%. When the silicon content B is less than 20 wt%, the negative electrode material layer has a small gram capacity. When the silicon content B is greater than 60 wt%, the silicon-based particle has a higher volume change rate during lithium intercalation and deintercalation, and more SEIs are generated, accelerating consumption of lithium ions and electrolyte in a lithium-ion battery and significantly increasing impedance of the lithium-ion battery.

In this application, the porosity $\alpha_1$ of the silicon-based particle is 15% to 60%. For example, a lower limit value of the porosity $\alpha_1$ of the silicon-based particle may include one of the following values: 15%, 16%, 18%, 25%, 30%, or 33%; and an upper limit value of the porosity $\alpha_1$ of the silicon-based particle may include one of the following values: 38%, 45%, 47%, 56%, or 60%. When the porosity $\alpha_1$ of the silicon-based particle is less than 15%, space left is insufficient to buffer volume swelling of nano silicon during lithium intercalation, and mechanical strength of a carbon material is insufficient to bear a huge swelling stress, leading to cracking of structure of the silicon-based particle and deterioration of electrochemical performance thereof. When the porosity $\alpha_1$ of the silicon-based particle is greater than 60%, excessively large pores reduce compressive strength of the carbon material, and therefore the silicon-based particle is likely to crack during processing and the electrochemical performance thereof deteriorates.

In this application, the porosity $\alpha_2$ of the negative electrode plate is 15% to 41%. For example, a lower limit value of the porosity $\alpha_2$ of the negative electrode plate may include one of the following values: 15%, 19%, or 28%; and an upper limit value of the porosity $\alpha_2$ of the negative electrode plate may include one of the following values: 35% or 41%. When the porosity $\alpha_2$ of the negative electrode plate is less than 15%, insufficient infiltration of the electrolyte increases a transmission distance of lithium ions and deteriorates kinetic performance of the lithium-ion battery. When the porosity $\alpha_2$ of the negative electrode plate is greater than 41%, contact failure between the silicon-based particles and the graphite particles is likely to occur during cycling of the lithium-ion battery, causing deterioration of cycling performance and reduction of energy density of the lithium-ion battery.

In this application, the pores in the silicon-based particles and the pores in the negative electrode plate each independently include micropores with a pore diameter less than 2 nm, mesopores with a pore diameter of 2 nm to 50 nm, or macropores with a pore diameter greater than 50 nm. In this application, the numbers of the micropores, mesopores and macropores are not particularly limited provided that the objectives of this application can be achieved.

As a whole, the negative electrode plate provided in this application includes a negative electrode material layer, where the negative electrode material layer includes silicon-based particles and graphite particles. Pores are formed in the silicon-based particles and the negative electrode plate, and the porosity $\alpha_1$ of the silicon-based particle, the silicon content B in the silicon-based particle, and the porosity $\alpha_2$ of the negative electrode plate are controlled within the foregoing ranges to jointly alleviate lithium intercalation swelling of the negative electrode plate. The above design not only allows the negative electrode plate to have sufficient space for lithium intercalation swelling, but also guarantees structural stability and processibility thereof, thereby fundamentally solving the problem of failure of lithium-ion batteries caused by volume swelling deformation of the negative electrode active material, and effectively improving the cycling performance and alleviating swelling deformation of the lithium-ion batteries.

In an implementation of this application, the sum $\alpha$ of the porosity $\alpha_1$ of the silicon-based particle and the porosity $\alpha_2$ of the negative electrode plate satisfies $45\% < \alpha < 90\%$. For example, a lower limit value of the sum $\alpha$ of the porosity $\alpha_1$ of the silicon-based particle and the porosity $\alpha_2$ of the negative electrode plate may include one of the following values: 45%, 46%, 49%, 53%, 58%, 61%, or 62%; and an upper limit value of the sum $\alpha$ of the porosity $\alpha_1$ of the silicon-based particle and the porosity $\alpha_2$ of the negative electrode plate may include one of the following values: 65%, 71%, 73%, 88%, or 90%. When the sum $\alpha$ the porosity $\alpha_2$ of the negative electrode plate and the porosity $\alpha_1$ of the silicon-based particle is controlled with the foregoing ranges, the cycling performance and swelling resistance of the lithium-ion batteries are significantly improved.

In an implementation of this application, the porosity $\alpha_1$ and the silicon content B of the silicon-based particle satisfy $P = 0.5\alpha_1/(B-\alpha_1 B)$, where $0.2 \leq P \leq 1.6$. For example, a lower limit value of P may include one of the following values: 0.2, 0.4, 0.5, or 0.8; and an upper limit value of P may include one of the following values: 1.1, 1.5, or 1.6.

When P is less than 0.2, pores reserved in the silicon-based particle are insufficient to buffer volume swelling of nano silicon during lithium intercalation, and mechanical strength of the carbon material is insufficient to bear a huge swelling stress, leading to cracking of structure of the silicon-based particle and deterioration of electrochemical performance thereof. When P is greater than 1.6, excessively large pores reserved in the silicon-based particle reduce mechanical compressive strength of the carbon material, therefore the silicon-based particle is likely to crack during processing and a great number of new interfaces are exposed, deteriorating the first-cycle efficiency and cycling performance of lithium-ion batteries and reducing the energy density of lithium-ion batteries. Therefore, with P controlled within the foregoing ranges, the energy density, cycling performance, and swelling resistance of lithium-ion batteries can be effectively improved.

In an implementation of this application, percentage of the silicon-based particles in the negative electrode material layer is 3 wt% to 80 wt%. For example, a lower limit value of the percentage of the silicon-based particles in the negative electrode material layer may include one of the following values: 3 wt%, 10 wt%, 20 wt%, 25 wt%, 30 wt%, 35 wt%, or 40 wt%; and an upper limit value of the silicon-based particles in the negative electrode material layer may include one of the following values: 45 wt%, 55 wt%, 60 wt%, 70 wt%, or 80 wt%. The percentage of the silicon-based particles in the negative electrode material layer being controlled within the foregoing ranges allows the negative electrode material layer to maintain a high gram capacity, thereby increasing the energy density of lithium-ion batteries.

The percentage of the graphite particles in the negative electrode material layer is not particularly limited in this application, provided that the objectives of this application can be achieved. For example, the percentage of the graphite particles in the negative electrode material layer may be 20 wt% to 97 wt%, where a lower limit value of the percentage of the graphite particles in the negative electrode material layer may include one of the following values: 20 wt%, 25 wt%, 30 wt%, or 40 wt%, and an upper limit value of the percentage of the graphite particles in the negative electrode material layer may include one of the following values: 50 wt%, 60 wt%, 70 wt%, 80 wt%, or 90 wt%. The percentage of the graphite particles in the negative electrode material layer being controlled within the foregoing ranges allows the negative electrode material layer to have a higher electrical conductivity, reducing contact between the negative electrode material layer and electrolyte and reducing generation of SEIs.

In an implementation of this application, the silicon-based particle may contain element silicon, element carbon, and element oxygen, and the silicon-based particle may further contain element nitrogen, element phosphorus, element sulfur, or the like. The type of the silicon-based particle is not particularly limited in this application, provided that the objectives of this application can be achieved. For example, the type of the silicon-based particle may include at least one of nano silicon, silicon nano silicon, silicon carbon, nano silicon oxide, or silicon-metal alloy.

In an implementation of this application, a peak intensity ratio of peak D and peak G in a Raman test for the silicon-based particles is 0.2 to 2, where peak D is a peak with a shift ranging from 1255 $cm^{-1}$ to 1355 $cm^{-1}$ in a Raman spectrum of the silicon-based particles, and peak G is a peak with a shift ranging from 1575 $cm^{-1}$ to 1600 $cm^{-1}$ in the Raman spectrum of the silicon-based particles. When the peak intensity ratio of peak D and peak G in the Raman test for the silicon-based particles is controlled within the foregoing range, the carbon material of the silicon-based particles has sufficient pore space to restrain swelling deformation of the carbon material during cycling, thereby improving the swelling resistance and cycling performance of the negative electrode plate.

In an implementation of this application, a carbon material is present on the surfaces of the silicon-based particles, and the type of the carbon material is not particularly limited in this application, provided that the objectives of this application can be achieved. For example, the carbon material may include at least one of amorphous carbon, carbon nanotubes, carbon nano particles, vapor-deposited carbon fiber, or graphene. In some embodiments of this application, the carbon nanotubes may include at least one of single-walled carbon nanotubes or multi-walled carbon nanotubes. A preparation method for the carbon material present on the surfaces of the silicon-based particles is not particularly limited in this application, provided that the objectives of this application can be achieved. In this application, the percentage of the carbon material is not particularly limited, provided that the objectives of this application can be achieved. For example, the percentage may be 0.01 wt% to 1 wt% based on weight of the silicon-based particle, such as 0.01 wt%, 0.1 wt%, 0.5 wt%, or 1 wt%. The carbon material being present on the surfaces of the silicon-based particles is conducive to improving interface stability of the surfaces of the silicon-based particles so as to constrain deflection of the silicon-based particles and also effectively alleviating structural damage caused by volume swelling and shrinkage of the silicon-based particles, so that generation of a new interface is avoided, thereby improving the cycling performance and alleviating swelling deformation of the negative electrode plate.

In an implementation of this application, a polymer material is present on the surfaces of the silicon-based particles, and the type of the polymer material is not particularly limited in this application, provided that the objectives of this application can be achieved. For example, the polymer material may include at least one of polyvinylidene fluoride (PVDF), carboxymethyl cellulose (CMC), sodium carboxymethyl cellulose (CMC-Na), polyvinyl pyrrolidone (PVP), polyacrylic acid, polystyrene butadiene rubber, or a derivative thereof. In some embodiments of this application, the polymer material may include sodium carboxymethyl cellulose, polyvinylpyrrolidone, polyvinylidene fluoride, and polyacrylic acid sodium (PAANa). This application imposes no particular limitation on a method for preparing the polymer material on the surfaces of the silicon-based particles, provided that the objectives of this application can be achieved. In this application, percentage of the polymer material is not particularly limited, provided that the objectives of this application can be achieved. For example, the percentage may be 0 wt% to 0.4 wt% based on the silicon-based particle, such as 0 wt%, 0.025 wt%, 0.15 wt%, or 0.4 wt%.

In an implementation of this application, a median particle size $D_v50$ of the silicon-based particles is less than 20 $\mu$m. Without being limited to any theory, when the median particle size $D_v50$ of the silicon-based particles is greater than 20 $\mu$m, problems such as scratches are likely to occur during processing of the negative electrode plate, and mutual contact sites between the particles are reduced, thereby affecting the cycling performance of the negative electrode plate. The median particle size $D_v50$ of the silicon-based particles in this application being controlled within the foregoing range can improve the cycling performance of the negative electrode plate. The particle size of the graphite particles in this application is not particularly limited, provided that the objectives of this application can be achieved.

In an implementation of this application, a specific surface area of the silicon-based particle is less than 50 $m^2$/g. Without being limited to any theory, when the specific surface area of the silicon-based particle is greater than 50 $m^2$/g, the specific surface area of the silicon-based particle is excessively large, side reaction affects the performance of lithium-ion batteries, and more binder is consumed. Therefore, an adhesion force between the negative electrode material layer and the negative electrode current collector is reduced, and growth rate of internal resistance is high. In this application, magnitude of the specific surface area of the graphite particles is not particularly limited, provided that the objectives of this application can be achieved.

Compacted density of the negative electrode plate in this application is 1.0 $g/cm^3$ to 1.9 $g/cm^3$, allowing high energy density of lithium-ion batteries.

In this application, the negative electrode current collector contained in the negative electrode plate is not particularly limited, provided that the objectives of this application can be achieved. For example, the negative electrode current collector may include copper foil, copper alloy foil, nickel foil, stainless steel foil, titanium foil, nickel foam, copper foam, a composite current collector, or the like. In this application, thicknesses of the negative electrode current collector and the negative electrode material layer are not particularly limited, provided that the objectives of this application can be achieved. For example, the thickness of the negative electrode current collector is 6 $\mu$m to 10 $\mu$m, and the thickness of the negative electrode material layer is 30 $\mu$m to 120 $\mu$m. The thickness of the negative electrode plate in this application is not particularly limited, provided that the objectives of this application can be achieved. For example, the thickness of the negative electrode plate is 50 $\mu$m to 150 $\mu$m.

Optionally, the negative electrode plate may further include a conductive layer, where the conductive layer is located between the negative electrode current collector and the negative electrode material layer. The conductive layer is not particularly limited in composition and may be a conductive layer commonly used in the art. The conductive layer includes a conductive agent and a binder.

The positive electrode plate in this application is not particularly limited, provided that the objectives of this application can be achieved. For example, the positive electrode plate typically includes a positive electrode current collector and a positive electrode material layer. The positive electrode current collector is not particularly limited, provided that the objectives of this application can be achieved. For example, the positive electrode current collector may include aluminum foil, aluminum alloy foil, a composite current collector, or the like. The positive electrode material layer includes a positive electrode active material. The positive electrode active material is not particularly limited, provided that the objectives of this application can be achieved. For example, the positive electrode active material may include at least one of lithium nickel cobalt manganate (811, 622, 523, 111), lithium nickel cobalt aluminate, lithium iron phosphate, a lithium-rich manganese-based material, lithium cobaltate, lithium manganate, lithium ferromanganese phosphate, or lithium titanate. In this application, thicknesses of the positive electrode current collector and the positive electrode material layer are not particularly limited, provided that the objectives of this application can be achieved. For example, the thickness of the positive electrode current collector is 8 $\mu$m to 12 $\mu$m, and the thickness of the positive electrode material layer is 30 $\mu$m to 120 $\mu$m.

Optionally, the positive electrode plate may further include a conductive layer, and the conductive layer is located between the positive electrode current collector and the positive electrode material layer. The conductive layer is not particularly limited in composition and may be a conductive layer commonly used in the art. The conductive layer includes a conductive agent and a binder.

The conductive agent is not particularly limited, provided that the objectives of this application can be achieved. For example, the conductive agent may include at least one of conductive carbon black (Super P), carbon nanotubes (CNTs), carbon nanofibers, flake graphite, Ketjen black, or graphene. The binder is not particularly limited, and any binder known in the art can be used provided that the objectives of this application can be achieved. For example, the binder may include at least one of polypropylene glycol, sodium polyacrylate, potassium polyacrylate, lithium polyacrylate, polyimide, polyimide, polyamide-imide, styrene-butadiene rubber (SBR), polyvinyl alcohol (PVA), polyvinylidene fluoride, polytetrafluoroethylene ethylene (PTFE), carboxymethyl cellulose, sodium carboxymethyl cellulose (CMC-Na), or the like. For example, styrene-butadiene rubber (SBR) may be selected as the binder.

The separator in this application is not particularly limited, provided that the objectives of this application can be achieved. For example, the separator may be at least one of a polyethylene (PE) and polypropylene (PP)-based polyolefin (PO) separator, a polyester film (for example, a polyethylene terephthalate (PET) film), a cellulose film, a polyimide film (PI), a polyamide film (PA), a spandex or aramid film, a woven film, a non-woven film (non-woven fabric), a microporous film, a composite film, a separator paper, a laminated film, a spinning film, or the like.

For example, the separator may include a substrate layer and a surface treatment layer. The substrate layer may be a non-woven fabric, film, or composite film having a porous structure. The substrate layer may be made of at least one of polyethylene, polypropylene, polyethylene terephthalate, polyimide, or the like. Optionally, a polypropylene porous film, a polyethylene porous film, a polypropylene non-woven fabric, a polyethylene non-woven fabric, or a polypropylene-polyethylene-polypropylene porous composite film may be used. Optionally, the surface treatment layer is provided on at least one surface of the substrate layer, and the surface treatment layer may be a polymer layer or an inorganic substance layer, or a layer formed by mixing a polymer and an inorganic substance.

For example, the inorganic substance layer includes inorganic particles and a binder. The inorganic particles are not particularly limited, and for example, may be selected from at least one of aluminum oxide, silicon oxide, magnesium oxide, titanium oxide, hafnium dioxide, tin oxide, cerium dioxide, nickel oxide, zinc oxide, calcium oxide, zirconium oxide, yttrium oxide, silicon carbide, boehmite, aluminum hydroxide, magnesium hydroxide, calcium hydroxide, barium sulfate, or the like. The binder is not particularly limited, and for example, may be selected from a combination of one or more of polyvinylidene fluoride, vinylidene fluoride-hexafluoropropylene copolymer, polyamide, polyacrylonitrile, polyacrylic ester, polyacrylic acid, polyacrylate, polyvinylpyrrolidone, polyvinyl ether, polymethyl methacrylate, polytetrafluoroethylene, or polyhexafluoropropylene. The polymer layer contains a polymer, and the polymer is made of at least one of polyamide, polyacrylonitrile, an acrylate polymer, polyacrylic acid, polyacrylate, polyvinylpyrrolidone, polyvinyl ether, polyvinylidene fluoride, poly(vinylidene fluoride-hexafluoropropylene), or the like. The lithium-ion battery in this application further includes an electrolyte. The electrolyte may be one or more of a gel electrolyte, a solid electrolyte, or a liquid electrolyte. The liquid electrolyte includes a lithium salt and a non-aqueous solvent.

In some implementations of this application, the lithium salt may include at least one of $LiPF_6$, $LiBF_4$, $LiAsF_6$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $LiSiF_6$, LiBOB, or lithium difluoroborate. For example, $LiPF_6$ may be selected as the lithium salt because it can provide high ionic conductivity and improve the cycling performance.

The non-aqueous solvent may be a carbonate compound, a carboxylate compound, an ether compound, another organic solvent, or a combination thereof. The carbonate compound may be a linear carbonate compound, a cyclic carbonate compound, a fluorocarbonate compound, or a combination thereof. An instance of the linear carbonate compound is dimethyl carbonate (DMC), diethyl carbonate (DEC), dipropyl carbonate (DPC), methyl propyl carbonate (MPC), ethylene propyl carbonate (EPC), methyl ethyl carbonate (MEC), or a combination thereof. An instance of the cyclic carbonate compound is ethylene carbonate (EC), propylene carbonate (PC), butylene carbonate (BC), vinyl ethylene carbonate (VEC), and a combination thereof. An instance of the fluorocarbonate compound is fluoroethylene carbonate (FEC), 1,2-difluoro ethylene carbonate, 1,1-difluoro ethylene carbonate, 1,1,2-trifluoro ethylene carbonate, 1,1,2,2-tetrafluoro ethylene carbonate, 1-fluoro-2-methyl ethylene carbonate, 1-fluoro-1-methyl ethylene carbonate, 1,2-difluoro-1-methyl ethylene carbonate, 1,1,2-trifluoro-2-methyl ethylene carbonate, trifluoromethyl ethylene carbonate, or a combination thereof. An instance of the carboxylate compound is methyl formate, methyl acetate, ethyl acetate, n-propyl acetate, tert-butyl acetate, methyl propionate, ethyl propionate, propyl propionate, γ-butyrolactone, decanolide, valerolactone, mevalonolactone, caprolactone, or a combination thereof. An instance of the ether compound is dibutyl ether, tetraglyme, diglyme, 1,2-dimethoxyethane, 1,2-diethoxyethane, ethoxymethoxy ethane, 2-methyltetrahydrofuran, tetrahydrofuran, or a combination thereof. An instance of the another organic solvent is dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate ester, or a combination thereof.

This application further provides an electrochemical apparatus including the negative electrode plate according to any one of the foregoing implementations. The electrochemical apparatus has desired cycling performance, swelling resistance, rate performance, and volumetric energy density.

The electrochemical apparatus in this application is not particularly limited, and may include any apparatus in which an electrochemical reaction takes place. In some embodiments, the electrochemical apparatus may include but is not limited to a lithium metal secondary battery, a lithium-ion secondary battery (lithium-ion battery), a lithium polymer secondary battery, and a lithium-ion polymer secondary battery.

This application further provides an electronic apparatus including the electrochemical apparatus according to the implementations of this application. The electronic apparatus has desired cycling performance, swelling resistance, rate performance, and volumetric energy density.

The electronic apparatus in this application is not particularly limited, and may be any known electronic apparatus used in the prior art. In some embodiments, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a power-assisted bicycle, a bicycle, a lighting appliance, a toy, a game console, a clock, an electric tool, a flash lamp, a camera, a large household battery, and a lithium-ion capacitor.

A process for manufacturing the electrochemical apparatus is well known to persons skilled in the art, and is not particularly limited in this application. For example, the electrochemical apparatus may be manufactured in the following process: a positive electrode plate and a negative electrode plate are stacked with a separator therebetween; then a resulting stack is put into a housing after operations such as winding and folding as required; and electrolyte is injected into the housing and then the housing is sealed; where the separator used is the foregoing separator provided in this application. In addition, if necessary, an overcurrent prevention element, a guide plate, and the like may be placed in the housing to prevent pressure increase, overcharge, and overdischarge in the electrochemical apparatus.

According to the negative electrode plate and an electrochemical apparatus and electronic apparatus including such negative electrode plate provided in this application, the negative electrode material layer of the negative electrode plate includes silicon-based particles and graphite particles, where silicon content B in the silicon-based particle is 20 wt% to 60 wt%, porosity $\alpha_1$ of the silicon-based particles is 15% to 60%, and porosity $\alpha_2$ of the negative electrode plate is 15% to 41%. Therefore, this not only allows the negative electrode plate to have sufficient space for lithium intercalation swelling, but also guarantees the structural stability and processibility thereof, thereby fundamentally solving the problem of failure of the electrochemical apparatus caused by swelling deformation of the negative electrode active material, and effectively improving the cycling performance and alleviating swelling deformation of the electrochemical apparatus.

## BRIEF DESCRIPTION OF DRAWINGS

To describe the technical solutions in this application and the prior art more clearly, the following briefly describes the accompanying drawings required for describing some embodiments and the prior art. Apparently, the accompanying drawings in the following description show merely some embodiments of this application.

FIG. 1 is an SEM image of a cross section of a negative electrode plate according to an embodiment of this application;
FIG. 2 is a magnified SEM image of FIG. 1;
FIG. 3 shows cycling attenuation curves of Example 3 and Comparative example 1 of this application; and
FIG. 4 shows swelling curves of lithium-ion batteries in Example 3 and Comparative example 1.

Reference signs: 10. pores in silicon-based particles; and 20. pores in negative electrode plate.

## DESCRIPTION OF EMBODIMENTS

To make the objectives, technical solutions, and advantages of this application more comprehensible, the following describes this application in detail with reference to the accompanying drawings and some embodiments. Apparently, the described embodiments are merely some but not all of the embodiments of this application. All other technical solutions obtained by persons of ordinary skill in the art based on some embodiments of this application fall within the protection scope of this application.

It should be noted that, in the specific embodiments of this application, an example in which a lithium-ion battery is used as an electrochemical apparatus is used to explain this application. However, the electrochemical apparatus in this application is not limited to the lithium-ion battery.

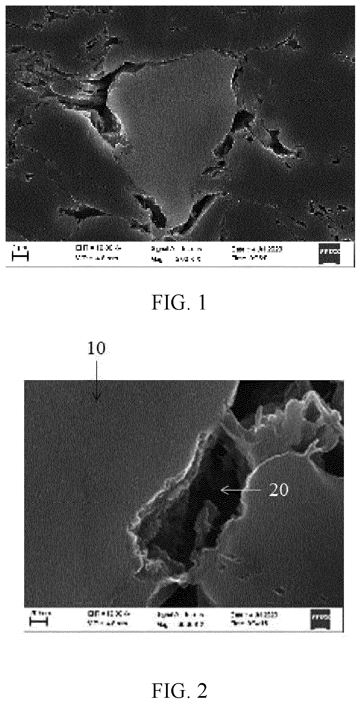

FIG. 1 is an SEM image of a cross section of a negative electrode plate according to an embodiment of this application, and FIG. 2 is a magnified SEM image of FIG. 1. Referring to FIG. 2, pores 10 in silicon-based particles refer to pores inside the silicon-based particles, and pores 20 of a negative electrode plate refer to pores among various particles.

## Examples

The following describes some embodiments of this application more specifically by using examples and comparative examples. Various tests and evaluations are performed in the following methods. In addition, unless otherwise specified, "part" and "%" are based on weight.

## Test method and device

### Porosity test for negative electrode plate

One mold was used to punch 50 negative electrode plates with a radius of d; a micrometer was used to measure a thickness h of each electrode plate; the electrode plates was put into a sample bin of an AccuPyc 1340 instrument; helium (He) was used to fill the electrode plates in the sealed sample bin; and then a true volume V of each electrode plate was measured using the Boyle law PV = nRT. After the test, small discs were counted for calculating an apparent volume $\pi d^2 \times 50 \times h$ of each sample. Finally, porosity $\alpha_2$ of the negative electrode plate was obtained according to the following formula: $\alpha_2 = 1 - V/\pi d^2 \times 50 \times h$.

### Porosity test for silicon-based particles

An interface of a silicon-based particle was shot using a scanning electron microscope transmission mode (STEM), and an obtained STEM image was used to measure the porosity. Specifically, Image J software was used to perform binaryzation on a threshold (threshold) of the STEM image; after dimension was determined using a proportional scale, an area of pores was calculated using analyze particles (Analyze Particles) to obtain an area proportion which is the porosity $\alpha_1$ of the silicon-based particle; and any 20 or more silicon-based particles were taken from the electrode plate and subjected to the same test, and an average value was calculated.

### Silicon percentage test for silicon-based particle

The silicon-based particles were sliced, and an element mass percentage average was measured using EDS (energy dispersive X-ray spectroscopy) linear scanning.

**Specific surface area test**

At a constant low temperature (-199°C to 193°C), the amounts of gas adsorbed by the surface of a solid under different relative pressures were measured, and then an adsorption amount of a monomolecular layer of the sample was measured based on the Brunauer-Emmett-Teller adsorption theory and its formula (BET formula), to calculate a specific surface area of the solid.

$$\text{BET formula: } \frac{p}{w(P0-p)} = \frac{1}{WmC} + (c-1)/(WmC) \cdot P/P0$$

In the formula, W is the mass of gas adsorbed by a solid sample under a relative pressure (P/P0), measured in $cm^3/g$;

Wm is the amount of gas adsorbed for full monomolecular layer coverage, measured in $cm^3/g$;
C is a constant related to adsorption heat and coagulation heat of the first layer;
slope: (c-1)/(WmC), intercept: 1/WmC, and total specific surface area: (Wm × N × Acs/M); and
specific surface area: S=St/m, where m is the mass of the sample, and Acs: an average area of each N2 molecule is $16.2A^2$.

1.5 g to 3.5 g of sample powder was weighed and put into a test sample tube of TriStar II 3020, and was degassed at 200°C for 120 min before testing.

**Method for measuring gram capacity of negative electrode material layer**

The gram capacity of the negative electrode material layer of a button battery was measured. In a constant-temperature environment at 25°C, an assembled button battery was left standing for 5 min and discharged to 0.005 V at 0.05C; then the battery was left standing for 5 min and discharged to 0.005 V at a current of 20 $\mu$A, where a sum of discharge capacities of the two cycles was D0; and the battery was left standing for 5 min and discharged to 2.0 V at 0.1C, and at that moment, a charge capacity was C0, and first-cycle charging efficiency was C0/D0×100%.

**Compacted density test for negative electrode plate**

A sheet-punching machine was used to punch the negative electrode plate into small discs with an area of S; the mass of the small disc was measured as $M_1$; a micrometer was used to measure a thickness $H_1$ of the small disc; the same sheet-punching machine was used for punching to obtain current collectors with the same area S, the mass of the current collector was measured as $M_2$, and the micrometer was used to measure a thickness $H_2$ of the current collector; and compacted density of the negative electrode was $(M_1-M_2)/(H_1-H_2)/S$.

**Particle size test**

0.02 g of sample powder was added into a 50ml clean beaker, and about 20 ml of deionized water was added into the beaker, with a few drops of a 1% surfactant added to make the powder be completely dispersed in the water. Then, the powder was subjected to ultrasonic treatment for 5 minutes in a 120W ultrasonic cleaning machine, and particle size distribution was tested with a MasterSizer 2000.
$D_v50$ refers to a diameter where the cumulative distribution by volume reaches 50%, which was measured by a laser scattering particle size analyzer.

**Cycling performance test**

At a test temperature of 25°C/45°C, the battery was charged to 4.4 V at a constant current of 0.7C, constant-voltage charged to 0.025C, left standing for 5 minutes, and then discharged to 3.0 V at 0.5C. A capacity obtained in this cycle was the initial capacity. Then, a 0.7C charge and 0.5C discharge cycling test was performed. A ratio of the capacity of each cycle to the initial capacity was calculated to obtain a capacity attenuation curve. The number of cycles to a capacity retention rate of 90% at 25°C was recorded as cycling performance of the lithium-ion battery under room temperature; and the number of cycles to a capacity retention rate of 80% at 45°C was recorded as cycling performance of the lithium-ion battery under high temperature. The numbers of cycles in the above two cases were compared to obtain cycling performance of the material.

**Discharging rate test**

At 25°C, the battery was discharged to 3.0 V at 0.2C, left standing for 5 min, charged to 4.45 V at 0.5C, constant-voltage charged to 0.05C, and left standing for 5 min. Then, the discharging rate was adjusted to 0.2C, 0.5C, 1C, 1.5C, and 2.0C respectively and discharge tests were performed under these rates to obtain respective capacities. The capacity obtained under each rate was compared with the capacity obtained under 0.2C, and ratios under 2C and 0.2C were compared for comparing rate performance.

**Full-charge swelling rate test for lithium-ion battery**

A spiral micrometer was used to measure thickness of a new half-charged lithium-ion battery. Then, after 400 cycles (cls), the lithium-ion battery was fully charged, the thickness of the lithium-ion battery at that time was measured with the spiral micrometer and compared with the thickness of the initial new half-charged lithium-ion battery to obtain a swelling rate of the fully-charged lithium-ion battery at that time.

**Energy density calculation**

After the lithium-ion battery was charged to 4.45 V at 25°C, a laser thickness gauge was used to measure length, width, and height of the lithium-ion battery to obtain a volume (V) of the lithium-ion battery. Then, the lithium-ion battery was discharged to 3 V at 0.2C to obtain a discharge capacity (C) and an average voltage plateau (U) of the lithium-ion battery; and volumetric energy density (ED) of the lithium-ion battery could be obtained through calculation according to the following formula: $ED = C \times U/V$.

**Example 1**

<Preparation of negative electrode active material>

A porous carbon material with a porosity of 41% was put into a sealed gas reactor containing silicon, heated up to 500°C, maintained at 500°C for 4 h, cooled, sieved, and demagnetized to obtain silicon-based particles with porosity $\alpha_1$ of 30%, where carbon content in the silicon-based particle is 64 wt%, and silicon content B in the silicon-based particle is 36 wt%.

<Preparation of negative electrode plate>

The negative electrode active material prepared above, graphite particles, and nano conductive carbon black were mixed at a mass ratio of 30:66.5:3.5 to obtain a first mixture; the first mixture and a binder PAA were added into deionized water at a mass ratio of 95:5 and proportioned to form a slurry with a solid content of 45%; the slurry was stirred to uniformity to obtain a first slurry mixture; the first slurry mixture was uniformly applied to one surface of a negative electrode current collector copper foil with a thickness of 8 $\mu$m, and then dried for 2 min at 120°C in dry air to obtain a negative electrode plate with a single surface coated with the negative electrode active material, where thickness of the coating was 7.5 mg/cm$^2$. After the foregoing steps were completed, single surface coating of the negative electrode plate was completed. Subsequently, the foregoing steps were repeated on the other surface of the negative electrode plate to obtain a negative electrode plate with both surfaces coated with the negative electrode active material. After cold pressing was completed, a negative electrode plate with porosity $\alpha_2$ of 15% was obtained, and the electrode plate was cut into a size of 41 mm $\times$ 61 mm for later use.

<Preparation of positive electrode plate>

Lithium cobaltate (LiCoO$_2$) as a positive electrode active material, nano conductive carbon black, and polyvinylidene fluoride (PVDF) were mixed at a weight ratio of 97.5:1.0:1.5, and N-methylpyrrolidone (NMP) was added as a solvent to prepare a slurry with a solid content of 75%, and the slurry was stirred to uniformity. The slurry was uniformly applied on one surface of a positive electrode current collector aluminum foil with a thickness of 10 $\mu$m and dried at 90°C to obtain a positive electrode plate with a coating thickness of 110 $\mu$m. After the foregoing steps were completed, single surface coating of the positive electrode plate was completed. Then, the foregoing steps were repeated on the other surface of the positive electrode plate to obtain a positive electrode plate with both surfaces coated with the positive electrode active material. After coating was completed, the electrode plate was cut into a size of 38 mm $\times$ 58 mm for later use.

<Preparation of electrolyte>

In a dry argon atmosphere, organic solvents ethylene carbonate (EO), ethyl methyl carbonate, and diethyl carbonate were mixed at a mass ratio of EC:EMC:DEC = 30:50:20 to obtain an organic solution, and then a lithium salt lithium hexafluorophosphate was dissolved in the organic solvents and mixed to uniformity, to obtain an electrolyte with a lithium salt concentration of 1.15 mol/L.

<Preparation of separator>

Aluminum oxide and polyvinylidene fluoride were mixed at a mass ratio of 90:10 and dissolved in deionized water to form a ceramic slurry with a solid content of 50%. Subsequently, the ceramic slurry was uniformly applied on one surface of a porous substrate (polyethylene with a thickness of 7 $\mu$m, an average pore diameter of 0.073 $\mu$m, and a porosity of 26%) using a micro-gravure coating method, followed by drying to obtain a double-layer structure with a ceramic coating and the porous substrate, where thickness of the ceramic coating was 50 $\mu$m.

Polyvinylidene fluoride (PVDF) and polyacrylate were mixed at a mass ratio of 96:4 and dissolved in deionized water to form a polymer slurry with a solid content of 50%. Then, the polymer slurry was uniformly applied on two surfaces of the double-layer structure with the ceramic coating and the porous substrate using the micro-gravure coating method, followed by drying to obtain a separator, where thickness of a single coating formed by the polymer slurry was 2 $\mu$m.

<Preparation of lithium-ion battery>

The prepared positive electrode plate, separator, and negative electrode plate were stacked in sequence, so that the separator was sandwiched between the positive electrode plate and the negative electrode plate for separation. Then a resulting stack was wound to obtain an electrode assembly. The electrode assembly was placed into an aluminum-plastic film packaging bag and dried, and then electrolyte was injected, followed by processes such as vacuum packaging, standing, formation, degassing, and trimming to obtain a lithium-ion battery.

Preparation steps of the <preparation of negative electrode active material>, <preparation of negative electrode plate>, <preparation of positive electrode plate>, <preparation of electrolyte>, <preparation of separator>, and <preparation of lithium-ion battery> in Example 2, Example 3, Example 4, Example 5, Example 6, Example 7, Example 8, Example 9, Example 10, Example 11, Example 12, Example 13, Example 14, Example 15, Example 16, and Example 17 were all the same as those in Example 1. Changes of related preparation parameters are shown in Table 1.

**Table 1**

| Example | Porosity $\alpha_1$ of silicon-based particle | Porosity $\alpha_2$ of negative electrode plate | Carbon content in silicon-based particle (wt%) | Silicon content B in silicon-based particle (wt%) |
|---|---|---|---|---|
| 1 | 30% | 15% | 64 | 36 |
| 2 | 30% | 19% | 64 | 36 |
| 3 | 30% | 28% | 64 | 36 |
| 4 | 30% | 35% | 64 | 36 |
| 5 | 30% | 41% | 64 | 36 |
| 6 | 15% | 28% | 64 | 36 |
| 7 | 18% | 28% | 64 | 36 |
| 8 | 33% | 28% | 64 | 36 |
| 9 | 45% | 28% | 64 | 36 |
| 10 | 60% | 28% | 64 | 36 |
| 11 | 16% | 15% | 60 | 40 |
| 12 | 25% | 15% | 60 | 40 |
| 13 | 38% | 15% | 60 | 40 |
| 14 | 47% | 15% | 60 | 40 |

(continued)

| Example | Porosity $\alpha_1$ of silicon-based particle | Porosity $\alpha_2$ of negative electrode plate | Carbon content in silicon-based particle (wt%) | Silicon content B in silicon-based particle (wt%) |
|---|---|---|---|---|
| 15 | 56% | 15% | 60 | 40 |
| 16 | 38% | 15% | 80 | 20 |
| 17 | 38% | 15% | 40 | 60 |

**Example 18**

<Preparation of negative electrode active material>

(1) A porous carbon material with a porosity of 41% was put into a sealed gas reactor containing silicon, heated up to 500°C, maintained at 500°C for 4 h, cooled, sieved, and demagnetized to obtain silicon-based particles with porosity $\alpha_1$ of 30%, where carbon content in the silicon-based particle is 64 wt%, and silicon content B in the silicon-based particle is 36 wt%.

(2) the silicon-based particles obtained in the step (1) were added into single-walled carbon nanotubes (SCNT) containing a sodium carboxymethyl cellulose (CMC-Na) dispersant and dispersed for 2 h until a uniform solution mixture was formed. Then, spray drying was performed to obtain powder, and the powder was crushed and sieved via a 400-mesh sieve to obtain a negative electrode material, where a mass ratio of the silicon-based particles, SCNT, and sodium carboxymethyl cellulose was 99.75:0.1:0.15.

The <preparation of negative electrode plate>, <preparation of positive electrode plate>, <preparation of electrolyte>, <preparation of separator>, and <preparation of lithium-ion battery> were the same as those in Example 3.

Preparation steps of the <preparation of negative electrode active materials <preparation of negative electrode plate>, <preparation of positive electrode plate>, <preparation of electrolyte>, <preparation of separator>, and <preparation of lithium-ion battery> in Example 19, Example 20, Example 21, Example 22, Example 23, Example 24, Example 25, Example 26, Example 27, Example 28, Example 29, Example 30, Example 31, Example 32, and Example 33 were all the same as those in Example 18. Changes of related preparation parameters are shown in Table 2.

**Table 2**

| Example | Porosity $\alpha_1$ of silicon-based particle | Porosity $\alpha_2$ of negative electrode plate | Carbon content in silicon-based particle (wt%) | Silicon content B in silicon-based particle (wt%) | Type of carbon material | Type of dispersant | Mass ratio of silicon-based particles, carbon material, and dispersant |
|---|---|---|---|---|---|---|---|
| 18 | 30% | 28% | 64 | 36 | SCNT | CMC-Na | 99.75:0.1:0.15 |
| 19 | 30% | 28% | 64 | 36 | Multi-walled carbon nanotubes (MCNT) | CMC-Na | 99.75:0.1:0.15 |
| 20 | 30% | 28% | 64 | 36 | SCNT:MCNT = 1:1 | CMC-Na | 99.75:0.1:0.15 |
| 21 | 30% | 28% | 64 | 36 | / | CMC-Na | 99.85:0.0:0.15 |
| 22 | 30% | 28% | 64 | 36 | SCNT | CMC-Na | 99.84:0.01:0.15 |
| 23 | 30% | 28% | 64 | 36 | SCNT | CMC-Na | 99.35:0.5:0.15 |
| 24 | 30% | 28% | 64 | 36 | SCNT | CMC-Na | 98.85:1.0:0.15 |
| 25 | 30% | 28% | 64 | 36 | SCNT | Polyvinylpyrrolidone (PVP) | 99.75:0.1:0.15 |
| 26 | 30% | 28% | 64 | 36 | SCNT | Polyvinylidene fluoride (PVDF) | 99.75:0.1:0.15 |
| 27 | 30% | 28% | 64 | 36 | SCNT | Sodium polyacrylate (PAANa) | 99.75:0.1:0.15 |

| Example | Porosity $\alpha_1$ of silicon-based particle | Porosity $\alpha_2$ of negative electrode plate | Carbon content in silicon-based particle (wt%) | Silicon content B in silicon-based particle (wt%) | Type of carbon material | Type of dispersant | Mass ratio of silicon-based particles, carbon material, and dispersant |
|---|---|---|---|---|---|---|---|
| 28 | 30% | 28% | 64 | 36 | SCNT | / | 99.9:0.1:0.0 |
| 29 | 30% | 28% | 64 | 36 | SCNT | CMC-Na | 99.5:0.1:0.4 |
| 30 | 30% | 28% | 64 | 36 | SCNT | CMC-Na | 99.875:0.1:0.025 |
| 31 | 30% | 28% | 64 | 36 | Amorphous carbon | / | 99.9:0.1:0.0 |
| 32 | 30% | 28% | 64 | 36 | Vapor-deposited carbon fibers | / | 99.9:0.1:0.0 |
| 33 | 30% | 28% | 64 | 36 | Graphene | / | 99.9:0.1:0.0 |

Note: "/" in Table 2 means that the corresponding preparation parameter is not applicable.

Preparation steps of the <preparation of negative electrode active material>, <preparation of negative electrode plate>, <preparation of positive electrode plate>, <preparation of electrolyte>, <preparation of separator>, and <preparation of lithium-ion battery> in Comparative example 1, Comparative example 2, Comparative example 3, Comparative example 4, Comparative example 5, and Comparative example 6 were all the same as those in Example 1. Changes of related preparation parameters are shown in Table 3.

**Table 3**

| Comparative example | Porosity $\alpha_1$ of silicon-based particle | Porosity $\alpha_2$ of negative electrode plate | Carbon content in silicon-based particle (wt%) | Silicon content B in silicon-based particle (wt%) |
|---|---|---|---|---|
| 1 | 30% | 10% | 64 | 36 |
| 2 | 30% | 62% | 64 | 36 |

(continued)

| Comparative example | Porosity $\alpha_1$ of silicon-based particle | Porosity $\alpha_2$ of negative electrode plate | Carbon content in silicon-based particle (wt%) | Silicon content B in silicon-based particle (wt%) |
|---|---|---|---|---|
| 3 | 5% | 28% | 64 | 36 |
| 4 | 67% | 35% | 64 | 36 |
| 5 | 8% | 15% | 60 | 40 |
| 6 | 60% | 15% | 60 | 40 |

Preparation parameters of Example 1, Example 2, Example 3, Example 4, Example 5, Example 6, Example 7, Example 8, Example 9, Example 10, Comparative example 1, Comparative example 2, Comparative example 3, and Comparative example 4 are shown in Table 4.

## Table 4

| | Porosity $\alpha_1$ of silicon-based particle | Porosity $\alpha_2$ of negative electrode plate | Silicon content B in silicon-based particle (wt%) | Gram capacity of anode of full battery (mAh/g) | Compacted density of negative electrode plate (g/cm³) |
|---|---|---|---|---|---|
| Example 1 | 30% | 15% | 36 | 500 | 1.78 |
| Example 2 | 30% | 19% | 36 | 500 | 1.75 |
| Example 3 | 30% | 28% | 36 | 500 | 1.68 |
| Example 4 | 30% | 35% | 36 | 500 | 1.63 |
| Example 5 | 30% | 41% | 36 | 500 | 1.61 |
| Example 6 | 15% | 28% | 36 | 500 | 1.57 |
| Example 7 | 18% | 28% | 36 | 500 | 1.68 |
| Example 8 | 33% | 28% | 36 | 500 | 1.68 |
| Example 9 | 45% | 28% | 36 | 500 | 1.68 |
| Example 10 | 60% | 28% | 36 | 500 | 1.68 |
| Comparative example 1 | 30% | 10% | 36 | 500 | 1.83 |
| Comparative example 2 | 30% | 62% | 36 | 500 | 1.41 |
| Comparative example 3 | 5% | 28% | 36 | 500 | 1.68 |
| Comparative example 4 | 67% | 28% | 36 | 500 | 1.68 |

Test results of Example 1, Example 2, Example 3, Example 4, Example 5, Example 6, Example 7, Example 8, Example 9, Example 10, Comparative example 1, Comparative example 2, Comparative example 3, and Comparative example 4 are shown in Table 5.

## Table 5

| | Capacity retention rate after 400 cycles at 25°C | Capacity retention rate after 200 cycles at 45°C | Deformation rate after 400 cycles at 25°C | Deformation rate after 200 cycles at 45°C | Volumetric energy density (Wh/L) |
|---|---|---|---|---|---|
| Example 1 | 86.1% | 85.3% | 9.6% | 9.5% | 784 |
| Example 2 | 88.6% | 87.1% | 8.4% | 8.2% | 795 |
| Example 3 | 92.4% | 92.1% | 6.5% | 6.7% | 816 |
| Example 4 | 91.8% | 91.5% | 6.5% | 6.7% | 798 |
| Example 5 | 89.4% | 88.1% | 6.7% | 7.3% | 782 |
| Example 6 | 88.2% | 85.3% | 9.5% | 10.1% | 790 |
| Example 7 | 90.2% | 87.1% | 8.2% | 8.1% | 793 |
| Example 8 | 92.5% | 92.3% | 6.5% | 6.7% | 817 |
| Example 9 | 91.7% | 90.1% | 6.4% | 7.0% | 777 |
| Example 10 | 92.0% | 91.1% | 6.3% | 6.5% | 763 |
| Comparative example 1 | 76.6% | 77.2% | 12.5% | 12.8% | 776 |
| Comparative example 2 | 78.2% | 74.4% | 11.7% | 12.3% | 743 |
| Comparative example 3 | 75.2% | 76.1% | 12.6% | 12.8% | 775 |
| Comparative example 4 | 77.3% | 75.6% | 11.3% | 11.4% | 742 |

Preparation parameters of Example 11, Example 12, Example 13, Example 14, Example 15, Example 16, Example 17, Comparative example 5, and Comparative example 6 are shown in Table 6.

## Table 6

| | Value of P | Porosity $\alpha_1$ of silicon-based particle | Silicon content B in silicon-based particle (wt%) | Gram capacity (mAh/g) | Specific surface area ($m^2$/g) |
|---|---|---|---|---|---|
| Example 11 | 0.2 | 16% | 40 | 1616 | 3.6 |
| Example 12 | 0.4 | 25% | 40 | 1614 | 6.5 |
| Example 13 | 0.8 | 38% | 40 | 1618 | 10.3 |
| Example 14 | 1.1 | 47% | 40 | 1613 | 15.4 |
| Example 15 | 1.6 | 56% | 40 | 1613 | 20.1 |
| Example 16 | 1.5 | 38% | 20 | 980 | 13.5 |
| Example 17 | 0.5 | 38% | 60 | 2240 | 4.4 |
| Comparative example 5 | 0.1 | 8% | 40 | 1611 | 3.2 |
| Comparative example 6 | 1.9 | 60% | 40 | 1616 | 47.7 |

Test results of Example 11, Example 12, Example 13, Example 14, Example 15, Example 16, Example 17, Comparative example 5, and Comparative example 6 are shown in Table 7.

## Table 7

| | Capacity retention rate after 400 cycles at 25°C | Capacity retention rate after 200 cycles at 45°C | Deformation rate after 400 cycles at 25°C | Deformation rate after 200 cycles at 45°C | Volumetric energy density (Wh/L) |
|---|---|---|---|---|---|
| Example 11 | 83.3% | 82.4% | 10.4% | 10.7% | 788 |
| Example 12 | 88.7% | 86.6% | 8.4% | 8.3% | 796 |
| Example 13 | 92.7% | 91.6% | 6.4% | 7.2% | 815 |

| | Capacity retention rate after 400 cycles at 25°C | Capacity retention rate after 200 cycles at 45°C | Deformation rate after 400 cycles at 25°C | Deformation rate after 200 cycles at 45°C | Volumetric energy density (Wh/L) |
|---|---|---|---|---|---|
| Example 14 | 91.3% | 88.6% | 6.3% | 7.0% | 782 |
| Example 15 | 90.3% | 87.1% | 6.2% | 6.7% | 770 |
| Example 16 | 93.3% | 92.1% | 6.0% | 6.2% | 752 |
| Example 17 | 87.7% | 86.3% | 9.6% | 9.3% | 806 |
| Comparative example 5 | 76.4% | 74.6% | 12.6% | 11.8% | 780 |
| Comparative example 6 | 81.3% | 78.6% | 11.3% | 11.0% | 750 |

Preparation parameters of Example 3, Example 18, Example 19, Example 20, Example 21, Example 22, Example 23, Example 24, Example 25, Example 26, Example 27, Example 28, Example 29, Example 30, Example 31, Example 32, and Example 33 are shown in Table 8.

**Table 8**

| | Type of carbon material | Percentage of carbon material (wt%) | Type of dispersant | Percentage of dispersant (wt%) |
|---|---|---|---|---|
| Example 3 | / | / | / | 0 |
| Example 18 | SCNT | 0.10 | CMC-Na | 0.15 |
| Example 19 | MCNT | 0.10 | CMC-Na | 0.15 |
| Example 20 | SCNT:MCNT = 1:1 | 0.10 | CMC-Na | 0.15 |
| Example 21 | SCNT | 0.00 | CMC-Na | 0.15 |
| Example 22 | SCNT | 0.01 | CMC-Na | 0.15 |
| Example 23 | SCNT | 0.50 | CMC-Na | 0.15 |
| Example 24 | SCNT | 1.00 | CMC-Na | 0.15 |
| Example 25 | SCNT | 0.10 | PVP | 0.15 |
| Example 26 | SCNT | 0.10 | PVDF | 0.15 |

(continued)

|  | Type of carbon material | Percentage of carbon material (wt%) | Type of dispersant | Percentage of dispersant (wt%) |
|---|---|---|---|---|
| Example 27 | SCNT | 0.10 | PAANa | 0.15 |
| Example 28 | SCNT | 0.10 | / | 0 |
| Example 29 | SCNT | 0.10 | CMC-Na | 0.4 |
| Example 30 | SCNT | 0.10 | CMC-Na | 0.025 |
| Example 31 | Amorphous carbon | 0.10 | / | 0 |
| Example 32 | Vapor-deposited carbon fibers | 0.10 | / | 0 |
| Example 33 | Graphene | 0.10 | / | 0 |
| Note: "/" in Table 8 means that the corresponding preparation parameter is not applicable. | | | | |

Test results of Example 3, Example 18, Example 19, Example 20, Example 21, Example 22, Example 23, Example 24, Example 25, Example 26, Example 27, Example 28, Example 29, Example 30, Example 31, Example 32, and Example 33 are shown in Table 9.

## Table 9

| | Capacity retention rate after 400 cycles at 25°C | Capacity retention rate after 200 cycles at 45°C | Deformation rate after 400 cycles at 25°C | Deformation rate after 200 cycles at 45°C | Rate performance (2C) |
|---|---|---|---|---|---|
| Example 3 | 92.7% | 91.6% | 6.4% | 7.2% | 87.7% |
| Example 18 | 94.6% | 92.4% | 6.3% | 7.5% | 87.6% |
| Example 19 | 93.2% | 90.4% | 6.4 % | 7.5% | 87.6% |
| Example 20 | 93.7% | 90.8% | 6.4 % | 7.8% | 87.3% |
| Example 21 | 91.7% | 88.4% | 6.7 % | 8.3 % | 84.6% |
| Example 22 | 94.6% | 92.4% | 6.3% | 7.5% | 87.6% |
| Example 23 | 94.4% | 92.0% | 6.7 % | 7.8% | 88.6% |
| Example 24 | Unable to process | | | | |
| Example 25 | 92.7% | 89.7% | 7.7 % | 8.9% | 84.1% |
| Example 26 | 92.9% | 90.1% | 7.2 % | 8.4% | 84.6% |
| Example 27 | 93.3% | 90.9% | 7.0 % | 7.8% | 85.6% |
| Example 28 | 90.7% | 86.4% | 8.6 % | 9.4% | 85.4% |
| Example 29 | 93.3% | 90.5% | 7.8 % | 8.7% | 81.1% |
| Example 30 | 93.2% | 90.2% | 6.6% | 7.7% | 87.6% |
| Example 31 | 92.9% | 92.1% | 6.3% | 7.0% | 87.9% |
| Example 32 | 93.2% | 92.3% | 6.2% | 7.0% | 88.1% |
| Example 33 | 93.5% | 92.8% | 6.3% | 6.9 % | 88.4% |

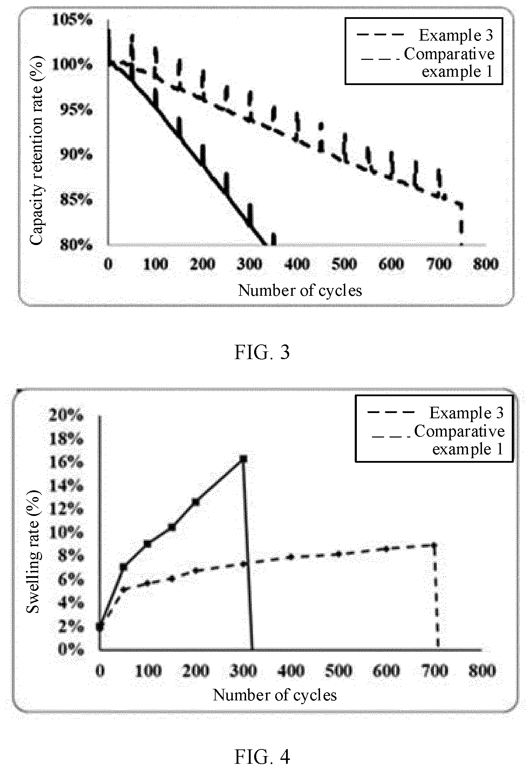

It can be learned from Example 1, Example 2, Example 3, Example 4, Example 5, Comparative example 1, and Comparative example 2 that when the porosity of the silicon-based particle is fixed, the porosity of the negative electrode plate is excessively low, and the cycling performance and swelling resistance of the lithium-ion battery deteriorate significantly. This is because that the pores inside the silicon-based particles cannot completely alleviate volume swelling during lithium intercalation in silicon, and lithium intercalation swelling of silicon needs to be further alleviated by virtue of the porosity of the negative electrode plate. In addition, volume swelling causes insufficient infiltration of the electrolyte, increasing the transmission distance of lithium ions, and deteriorating the kinetic performance of the lithium-ion battery. When the porosity of the negative electrode plate is excessively high, gaps between particles of the negative electrode material layer are excessively large, contact areas between the particles are reduced, intercalation sites of the lithium ions are reduced, and the lithium-ion battery is likely to shed its coating during cycling, leading to significant deterioration of the cycling performance, swelling resistance and kinetic performance of the lithium-ion battery. In addition, the compacted density of the negative electrode plate is reduced, and the volumetric energy density of the lithium-ion battery is also significantly reduced. FIG. 3 shows cycling attenuation curves of Example 3 and Comparative example 1 of this application; and FIG. 4 shows swelling curves of Example 3 and Comparative example 1.

It can be learned from Example 6, Example 7, Example 8, Example 9, Example 10, Comparative example 3, and Comparative example 4 that when the porosity of the negative electrode plate is fixed, the porosity of the silicon-based particle is excessively low, and the cycling performance and swelling resistance of the lithium-ion battery deteriorate significantly. This is because that the space left in the silicon-based particle is insufficient to buffer the lithium intercalation swelling of nano silicon, and in that case the mechanical strength of the carbon material is insufficient to bear a huge swelling stress, resulting in easy cracking of structure of the silicon-based particle during cycling. When the porosity of the silicon-based particle is excessively high, compressive strength of the carbon material is reduced. As a result, the silicon-based particle is likely to crack during processing, and electrical performance thereof deteriorates. In addition, with reduction of the compacted density of the electrode plate, the volumetric energy density of the lithium-ion battery is accordingly reduced.

It can be learned from Example 1, Example 2, Example 3, Example 4, Example 5, Example 6, Example 7, Example 8, Example 9, and Example 10 that rational proportioning of the porosity of the negative electrode plate and the porosity of the silicon-based particle in the lithium-ion battery can more effectively improve the cycling performance and swelling resistance of the lithium-ion battery and increase the volumetric energy density of the lithium-ion battery.

It can be learned from Example 11, Example 12, Example 13, Example 14, Example 15, Comparative example 5, and Comparative example 6 that when the silicon content B is fixed, the negative electrode material layers have no significant difference in gram capacity, and with increase of the porosity of the silicon-based particle, the specific surface area of the silicon-based particle increases gradually.

It can be learned from Example 13, Example 16, and Example 17 that changes of the silicon content B in the silicon-based particle lead to changes of the value of P, which in turn affects the gram capacity of the negative electrode material layer and the specific surface area of the silicon-based particle.

It can be learned from Example 11, Example 12, Example 13, Example 14, Example 15, Example 16, Example 17, Comparative example 5, and Comparative example 6 that when the value of P is excessively small, the pores reserved in the silicon-based particle are insufficient to buffer volume swelling of nano silicon during lithium intercalation, and in that case the mechanical strength of the carbon material is insufficient to bear a huge swelling stress, leading to cracking of structure of the silicon-based particle and deterioration of electrochemical performance of the lithium-ion battery; and when the value of P is excessively large, excessively large pores reserved in the silicon-based particle reduce mechanical compressive strength of the carbon material, therefore the silicon-based particle is likely to crack during processing and a great number of new interfaces are exposed, deteriorating the first-cycle efficiency and cycling performance of the lithium-ion battery and reducing the overall energy density of the lithium-ion battery. When the value of P is within the range defined in this application, the cycling performance, swelling resistance, and volumetric energy density of the lithium-ion battery can be effectively improved. This not only allows the silicon-based particle to have sufficient space for lithium intercalation swelling of silicon, but also guarantees the structural stability and processibility thereof.

Example 18, Example 19, Example 20, Example 21, Example 22, Example 23, Example 24, Example 25, Example 26, Example 27, Example 28, Example 29, Example 30, Example 31, Example 32, and Example 33 were compared with Example 3, showing that the addition of 0.1 wt% of SCNT to the surface of the silicon-based particle can significantly improve the cycling performance, the addition of 0.1 wt% of MCNT slightly improves the cycling performance, and the addition of 0.05 wt% of SCNT and 0.05 wt% of MCNT improves the cycling performance to some extent. In Example 18, Example 21, Example 22, Example 23, and Example 24, the amount of SCNT added was changed; the amount of SCNT added being controlled to be less than or equal to 0.5% can effectively improve the cycling performance; however, when the amount of SCNT added reaches 0.5 wt%, the cycling performance is not significantly improved and the first-cycle efficiency is even reduced in comparison with that when the amount of SCNT added is 0.1 wt%; and when the amount of SCNT added reaches 1 wt%, excessive SCNT causes failure of processing of the slurry. In Example 18, Example 25, Example 26, and Example 27, influences of different dispersants were compared, where if no dispersant is added, SCNT cannot be dispersed, with an undesirable dispersion effect achieved, the cycling performance deteriorates, and deformation of the lithium-ion battery worsens; and when PVP and PVDF are used as dispersants, the cycling performance slightly deteriorates in comparison with that when CMC-Na and PAANa are used as dispersants. In Example 18, Example 28, Example 29, and Example 30, the amount of the dispersant added was changed. When the amount of the dispersant is 0.4 wt%, the dispersion effect is improved, but excessive dispersant deteriorates the rate performance; and when the amount of the dispersant is 0.025 wt%, an undesirable dispersion effect is achieved, and the cycling performance and rate performance deteriorate in comparison with that when the amount of the dispersant is 0.15 wt%. In Example 28, Example 31, Example 32, and Example 33, different carbon materials for coating were compared. The results show that CNT and graphene have the best coating effect, because after materials are coated with CNT and graphene, electronic conductivity of the materials are increased, and contact sites between the materials can be increased, thereby reducing cycling attenuation caused by contact failure.

According to the analysis described above, in the negative electrode plate provided in this application, the porosity $\alpha_1$ of the silicon-based particle, the silicon content B in the silicon-based particle, and the porosity $\alpha_2$ of the negative electrode plate are controlled within rational ranges to jointly alleviate lithium intercalation swelling of the negative electrode plate, thereby fundamentally solving the problem of failure of the electrochemical apparatus caused by volume swelling deformation of the negative electrode active material, and effectively improving the cycling performance and alleviating swelling deformation of the electrochemical apparatus.

The foregoing descriptions are merely preferable embodiments of this application, but are not intended to limit this application. Any modification, equivalent replacement, or improvement made without departing from the spirit and principle of this application shall fall within the protection scope of this application.

**Claims**

1. A negative electrode plate, comprising a negative electrode material layer, the negative electrode material layer comprising silicon-based particles and graphite particles, wherein silicon content B in the silicon-based particle is 20 wt% to 60 wt%, porosity $\alpha_1$ of the silicon-based particle is 15% to 60%, and porosity $\alpha_2$ of the negative electrode plate is 15% to 41%.

2. The negative electrode plate according to claim 1, wherein a sum $\alpha$ of the porosity $\alpha_1$ of the silicon-based particle and the porosity $\alpha_2$ of the negative electrode plate satisfies $45\% < \alpha < 90\%$.

3. The negative electrode plate according to claim 1, wherein the porosity $\alpha_1$ of the silicon-based particle and the silicon content B satisfy $P = 0.5\alpha_1/(B-\alpha_1 B)$, wherein $0.2 \leq P \leq 1.6$.

4. The negative electrode plate according to claim 1, wherein percentage of the silicon-based particles in the negative electrode material layer is 3 wt% to 80 wt%.

5. The negative electrode plate according to claim 1, wherein the silicon-based particle contains element silicon, element carbon, and element oxygen.

6. The negative electrode plate according to claim 1, wherein a peak intensity ratio of peak D to peak G in a Raman test for the silicon-based particles is 0.2 to 2; and
peak D is a peak with a shift ranging from 1255 $cm^{-1}$ to 1355 $cm^{-1}$ in a Raman spectrum of the silicon-based particles, and peak G is a peak with a shift ranging from 1575 $cm^{-1}$ to 1600 $cm^{-1}$ in the Raman spectrum of the silicon-based particles.

7. The negative electrode plate according to claim 1, wherein a carbon material is present on surface of the silicon-based particle, the carbon material comprising at least one of amorphous carbon, carbon nanotubes, carbon nanoparticles, vapor-deposited carbon fibers, or graphene.

8. The negative electrode plate according to claim 1, wherein a median particle size $D_v50$ of the silicon-based particles is less than 20 $\mu m$.

9. The negative electrode plate according to claim 1, wherein a specific surface area of the silicon-based particle is less than 50 $m^2/g$.

10. An electrochemical apparatus, comprising the negative electrode plate according to any one of claims 1 to 9.

11. An electronic apparatus, comprising the electrochemical apparatus according to claim 10.

FIG. 1

FIG. 2

FIG. 3

FIG. 4

## INTERNATIONAL SEARCH REPORT

| | International application No. |
|---|---|
| | **PCT/CN2020/140366** |

**A. CLASSIFICATION OF SUBJECT MATTER**

H01M 4/134(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

WPI, EPODOC, CNPAT, CNKI: 电池, 负极, 阳极, 电极, 硅, 碳, 石墨, 孔隙率, 拉曼, 粒径, 比表面积, batter+, cell?, negative, electrode?, anode?, silicon, carbon, graphite, porosity, raman, diameter, specific surface area

**C. DOCUMENTS CONSIDERED TO BE RELEVANT**

| Category* | Citation of document, with indication, where appropriate, of the relevant passages | Relevant to claim No. |
|---|---|---|
| Y | CN 106876665 A (NANCHANG RESEARCH INSTITUTE, SUZHOU INSTITUTE OF NANO-TECH AND NANO-BIONICS(SINANO), CHINESE ACADEMY OF SCIENCES) 20 June 2017 (2017-06-20) <br> description, paragraphs 26-69 | 1, 2, 4-11 |
| Y | CN 110867560 A (NINGDE CONTEMPORARY AMPEREX TECHNOLOGY CO., LTD.) 06 March 2020 (2020-03-06) <br> description, paragraphs 9-23 | 1, 2, 4-11 |
| Y | CN 105981203 A (SHIN-ETSU CHEMICAL CO., LTD.) 28 September 2016 (2016-09-28) <br> description paragraphs 98-140 | 6, 10, 11 |
| A | CN 106450246 A (JIANGXI ZHENG TUO ENERGY TECHNOLOGY POLYTRON CO., LTD.) 22 February 2017 (2017-02-22) <br> entire document | 1-11 |
| A | CN 107204431 A (BYD COMPANY LTD.) 26 September 2017 (2017-09-26) <br> entire document | 1-11 |
| A | US 9859554 B2 (GM GLOBAL TECHNOLOGY OPERATIONS LLC.) 02 January 2018 (2018-01-02) <br> entire document | 1-11 |

☐ Further documents are listed in the continuation of Box C.    ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **15 September 2021** | **30 September 2021** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

<div align="center">

**INTERNATIONAL SEARCH REPORT**
Information on patent family members

</div>

| International application No. |
| --- |
| **PCT/CN2020/140366** |

| Patent document cited in search report | | | Publication date (day/month/year) | Patent family member(s) | | | Publication date (day/month/year) |
| --- | --- | --- | --- | --- | --- | --- | --- |
| CN | 106876665 | A | 20 June 2017 | CN | 106876665 | B | 02 August 2019 |
| CN | 110867560 | A | 06 March 2020 | CN | 110867560 | B | 02 April 2021 |
| | | | | EP | 3806196 | A1 | 14 April 2021 |
| | | | | US | 2021111410 | A1 | 15 April 2021 |
| | | | | WO | 2020042571 | A1 | 05 March 2020 |
| CN | 105981203 | A | 28 September 2016 | CN | 105981203 | B | 28 May 2019 |
| | | | | EP | 3104439 | B1 | 03 July 2019 |
| | | | | KR | 20160118258 | A | 11 October 2016 |
| | | | | WO | 2015118846 | A1 | 13 August 2015 |
| | | | | EP | 3104439 | A1 | 14 December 2016 |
| | | | | US | 10199678 | B2 | 05 February 2019 |
| | | | | JP | 6359836 | B2 | 18 July 2018 |
| | | | | EP | 3104439 | A4 | 09 August 2017 |
| | | | | JP | 2015149224 | A | 20 August 2015 |
| | | | | US | 2016351947 | A1 | 01 December 2016 |
| CN | 106450246 | A | 22 February 2017 | | None | | |
| CN | 107204431 | A | 26 September 2017 | CN | 107204431 | B | 21 February 2020 |
| US | 9859554 | B2 | 02 January 2018 | US | 2016006024 | A1 | 07 January 2016 |

Form PCT/ISA/210 (patent family annex) (January 2015)